# EUROPEAN PATENT APPLICATION

(11) **EP 4 751 623 A1**
(43) Date of publication of application: **03.06.2026**
(21) Application number: 25796448.6
(22) Date of filing: 09.10.2025
(51) Int. Cl.: A47J 37/06

(54) **MULTIFUNCTIONAL GAS GRILL**

(30) Priority: 10.10.2024 CN 202422451612 U
(71) Applicant: Haohong Electric Technology (Hubei) Co., Ltd., Huanggang, Hubei 438000 (CN)
(72) Inventor: WANG, Min, Huanggang, Hubei 438000 (CN)
(74) Representative: Jacobi, Markus Alexander
(86) International application number: PCT/CN2025/126473
(87) International publication number: WO 2026/077384

(57) **Abstract**

Disclosed is a multi-functional gas grill, and the multi-functional gas grill includes a grill body and a grill leg. The grill leg includes a first grill leg and a second grill leg, and the first grill leg is detachably connected to the second grill leg. The first grill leg and the second grill leg are distributed from a top to a bottom along a height direction of the grill legs, and the first grill leg is connected to an outer peripheral wall of the grill body.

## Description

The present application claims priority to Chinese Patent Application No. 202422451612.4, filed on October 10, 2024, the entire contents of which are incorporated herein by reference.

### TECHNICAL FIELD

The present application relates to the technical field of gas grills, and in particular to a multi-functional gas grill.

### BACKGROUND

The gas grill is a barbecue appliance that uses gas as fuel, generating heat to cook food. It typically consists of a grill cover, a grill head, a control box and a grilling grid. The grill head is the core component, which is used to mix gas and air and ignite them to produce flames. The control box includes a valve to regulate gas flow and an ignition device for adjusting the flame intensity and ignition. The grilling grid is used to place food, and the grill head and the control box are connected by a gas line. In outdoor environments, gas grills can directly heat food on the grilling grid using the flame generated by the grill head, providing a convenient and direct grilling method.

However, gas grills in the related art are often designed for outdoor use, meaning they need to be placed on the ground. In order to ensure the user can cook at an appropriate height, the grill legs are typically designed to be long. This design makes the cooking height unsuitable for the original user when the gas grill is placed on a higher support, limiting the flexibility of the gas grill in different scenarios.

### SUMMARY

The main purpose of the present application is to provide a multi-functional gas grill, aiming to solve the technical problem of limited flexibility in the application of gas grills in different scenarios in related art.

In order to achieve the above purpose, the present application provides a multi-functional gas grill, and the multi-functional gas grill includes: a grill body and a grill leg including a first grill leg and a second grill leg; the first grill leg is detachably connected to the second grill leg; and the first grill leg and the second grill leg are distributed from a top to a bottom along a height direction of the grill leg, and the first grill leg is connected to an outer peripheral wall of the grill body.

In an embodiment, an end of the first grill leg proximate to the second grill leg is provided with a first connecting portion, and an end of the second grill leg proximate to the first grill leg is provided with a second connecting portion; and the first connecting portion and the second connecting portion are connected by bolting.

In an embodiment, the first connecting portion is provided with a through slot, and the second connecting portion is provided with a first opening; a side wall of the through slot proximate to the first opening is provided with a second opening; the first opening is adapted to the second opening; and the multi-functional gas grill further includes a locking member, and the locking member passes through the second opening and is fixed to the first opening.

In an embodiment, the grill body is provided with a first cavity; the first cavity is provided with an opening facing upward, and a longitudinal cross-section of the first cavity is wider at a top and narrower at a bottom; and a bottom wall of the first cavity is provided with a boss, and a ring groove is formed between the boss and the side wall of the first cavity.

In an embodiment, the multi-functional gas grill further includes a grill cover; the grill cover is connected to the grill body by snap connection, and a shape of the grill cover is adapted to a shape of the first cavity.

In an embodiment, a supporting assembly is provided in the first cavity, and the supporting assembly includes a bracket and three supports; each of the three supports is provided at the side wall of the first cavity; and each of the three supports is provided with at least two grooves at intervals at an end proximate to the bottom wall of the first cavity, and the bracket is provided in the grooves.

In an embodiment, the multi-functional gas grill further includes a temperature equalizing plate; each of the three supports is provided with a plurality of protrusions at an end away from the bottom wall of the first cavity, and the temperature equalizing plate is abutted against the plurality of protrusions.

In an embodiment, the multi-functional gas grill further includes a tray group including a first tray and a second tray; shapes of the first tray and the second tray are adapted to a shape of the first cavity; a side wall of the first cavity proximate to each of the three brackets is protruded to form a protruding column, and a limiting groove is formed between the protruding column and each of the three brackets; the first tray is provided in any of the limiting grooves; a side of the second tray proximate to any of the protruding columns forms a limiting block, and the limiting block is provided with a mating portion for snapping to each of the protruding columns; and the mating portion is snapped to the protruding column.

**In** an embodiment, the multi-functional gas grill further includes: a control box provided at a side of the grill body and including a box body, an air duct and a knob; the box body is provided with a third opening and an air inlet; the knob is exposed from the third opening, and the air duct is connected to an external gas source through the air inlet.

**In** an embodiment, the multi-functional gas grill further includes a grill head; the boss is provided with a fourth opening for the grill head to pass through, and a portion of the grill head is exposed in the first cavity; an end of the grill head is connected to the knob through the air duct, and a ventilation plate is provided at an end of the grill head away from the boss.

The technical solution of the present application is to arrange the first grill leg and the second grill leg in sequence along the height direction of the grill legs, and the first grill leg and the second grill leg are detachably connected, which not only provides a firm support and ensures stability during use, but also allows the grill legs to be assembled and disassembled according to different usage scenarios, thereby expanding the usage scenarios, improving the application flexibility of the multi-functional gas grill, and helping to improve the convenience of the multi-functional gas grill.

### BRIEF DESCRIPTION OF THE DRAWINGS

In order to more clearly illustrate the embodiments of the present application or the technical solutions in the prior art, the following briefly describes the drawings required for use in the embodiments or prior art descriptions. Obviously, the drawings described below represent only some embodiments of the present application. Persons skilled in the art can, without inventive effort, derive other drawings based on the structures shown in these drawings.
FIG. 1 is a schematic structural view of a multi-functional gas grill according to one embodiment of the present application.
FIG. 2 is an exploded view of the multi-functional gas grill according to one embodiment of the present application.
FIG. 3 is a schematic cross-sectional view of the multi-functional gas grill according to one embodiment of the present application.

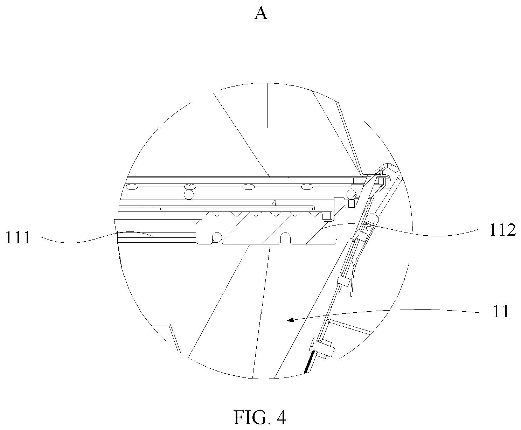

FIG. 4 is an enlarged view of a portion A in FIG. 3.

### Description of the reference numerals:

1000. multi-functional gas grill; 1. grill body; 11. first cavity; 111. bracket; 112. support; 12. ring groove; 13. fourth opening; 14. ventilation plate; 2. grill leg; 21. first grill leg; 22. second grill leg; 3. grill cover; 4. tray group; 41. temperature equalizing plate; 42. first tray; 43. second tray; 5. control box; 51. knob; 52. box body; 52a, third opening; 6. grill head.

The achievement of the objectives, functional features, and advantages of the present application will be further explained with reference to the accompanying drawings in conjunction with the embodiments.

### DETAILED DESCRIPTION OF THE EMBODIMENTS

The technical solutions of the embodiments of the present application will be described in more detail below with reference to the accompanying drawings. It is obvious that the embodiments to be described are only some rather than all of the embodiments of the present application. All other embodiments obtained by persons skilled in the art based on the embodiments of the present application without creative efforts shall fall within the scope of the present application.

It should be noted that if there are directional indications, such as up, down, left, right, front, back, etc., involved in the embodiments of the present application, the directional indications are only used to explain a certain posture as shown in the accompanying drawings. If the specific posture changes, the directional indication also changes accordingly.

In addition, if there are descriptions related to "first", "second", etc. in the embodiments of the present application, the descriptions of "first", "second", etc. are only for the purpose of description, and should not be construed as indicating or implying relative importance or implicitly indicating the number of technical features indicated. Thus, a feature delimited with "first", "second" may expressly or implicitly include at least one of these features. Besides, the meaning of "and/or" appearing in the application includes three parallel scenarios. For example, "A and/or B" includes only A, or only B, or both A and B. In addition, the technical solutions between the various embodiments can be combined with each other, but must be based on the realization by those skilled in the art. When the combination of technical solutions is contradictory or cannot be realized, it should be considered that the combination of such technical solutions does not exist or fall within the scope of the present application.

The present application provides a multi-functional gas grill.

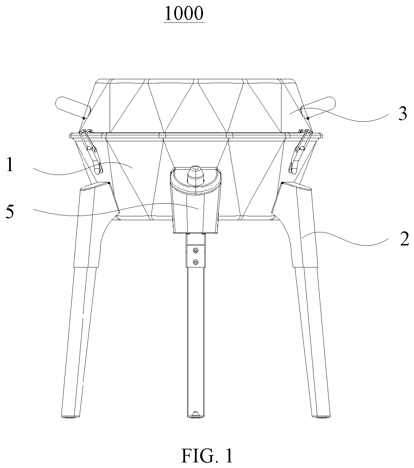

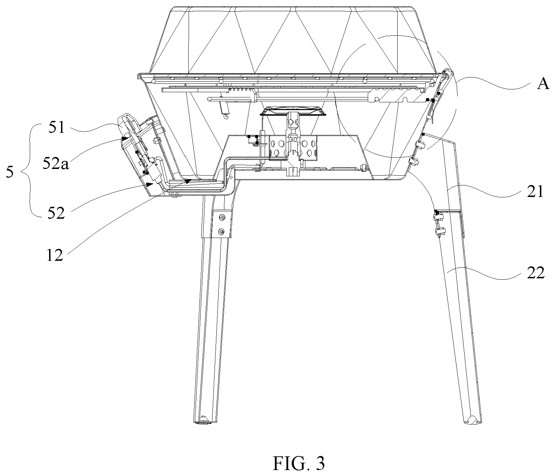

Referring to FIG. 1 and FIG. 3, in an embodiment of the present application, the multi-functional gas grill includes a grill body 1 and grill legs, and the grill legs include a first grill leg 21 and a second grill leg 22. The first grill leg 21 is detachably connected to the second grill leg 22. The first grill leg 21 and the second grill leg 22 are distributed from a top to a bottom along the grill leg, and the first grill leg 21 is connected to the outer peripheral wall of the grill body 1.

In this embodiment, the multi-functional gas grill can be used not only outdoors but also indoors. The grill body 1 provides a storage space, and the grill legs support the entire grill body 1. Accordingly, the connection between the first grill leg 21 and the second grill leg 22 can be by plug-in connection, snap-on connection, bolt connection, or other methods, and the bolt connection here because it can withstand a larger preload force. In an embodiment, since the first grill leg 21 and the second grill leg 22 are connected along the height direction of the grill legs, it is helpful to switch between different scenarios. In outdoor scenarios, the first grill leg 21 and the second grill leg 22 are assembled into a whole to support the entire grill body 1. In an indoor environment, in order to facilitate users to use on the table, the second grill leg 22 is disassembled and the first grill leg 21 is retained to support the entire grill body 1.

The technical solution of the present application is to sequentially arrange the first grill leg 21 and the second grill leg 22 along the height direction of the grill legs, and the first grill leg 21 is detachably connected to the second grill leg 22, which not only provides a firm support and ensures the stability during use, but also allows the grill legs to be assembled and disassembled according to different usage scenarios, thereby expanding the usage scenarios, improving the application flexibility of the multi-functional gas grill, and helping to improve the convenience of the multi-functional gas grill.

In an embodiment of the present application, an end of the first grill leg 21 proximate to the second grill leg 22 is provided with a first connecting portion, an end of the second grill leg 22 proximate to the first grill leg 21 is provided with a second connecting portion, and the first connecting portion and second connecting portion are connected by bolting.

Referring to FIG. 3, in this embodiment, both the first connecting portion and the second connecting portion are configured to connect the first grill leg 21 and the second grill leg 22. The first connecting portion and the second connecting portion can be connected in a specific manner not only by pre-opening holes in the first connecting portion and the second connecting portion, inserting bolts through the holes, and fastening them with nuts, but also by welding one end of a stud to one of the connecting portions and fastening the other end with a nut to connect to the other connecting portion, which is not limited here. The bolted connection method helps to enhance the stability and reliability of the overall structure. It also facilitates disassembly, facilitating the switching of the grill legs in different usage scenarios, thereby increasing the application flexibility of the multi-functional gas grill.

In an embodiment of the present application, the first connecting portion is provided with a through slot, the second connecting portion is provided with a first opening, a second opening is provided at the side wall of the through slot proximate to the first opening, and the first opening is adapted to the second opening. The multi-functional gas grill also includes a locking member, and the locking member passes through the second opening and is fixed to the first opening.

Referring to FIG. 3, in this embodiment, the through slot provides a connection base for assembling the second grill leg 22. The first opening and the second opening are adapted to ensure that the first grill leg 21 and the second grill leg 22 can be precisely assembled together, thereby achieving accurate positioning between the first grill leg 21 and the second grill leg 22. The presence of the locking member provides additional fixing to prevent displacement due to external forces or vibration. This arrangement not only ensures a precise connection, but also facilitates installation and maintenance, and facilitates the switching of grill legs in different usage scenarios.

In an embodiment of the present application, the grill body 1 is provided with a first cavity 11, the first cavity 11 is provided with an opening facing upward, and a longitudinal cross-section of the first cavity 11 is wider at a top and narrower at a bottom. A bottom wall of the first cavity 11 is provided with a boss, and a ring groove 12 is formed between the boss and the side wall of the first cavity 11.

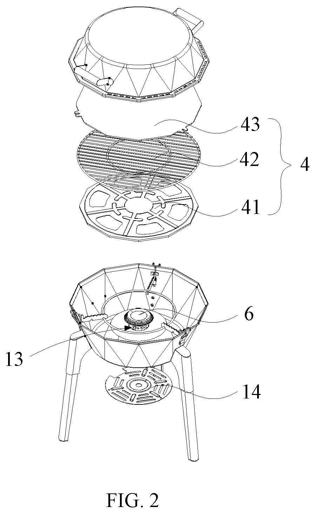

Referring to FIG. 2 and FIG. 3, in this embodiment, the first cavity 11 is configured to accommodate a grill head 6, a baking tray, a frying pan, and other components of the multi-functional gas grill. Accordingly, the wide top and the narrow bottom configuration of the first cavity 11 provides good structural stability. The boss and the shape of the first cavity 11 is matched so that when the multi-functional gas grill is in use, the oil remaining in the food flows along the side wall of the first cavity 11 into the ring groove 12 formed between the boss and the first cavity 11. The ring groove 12 is configured to contain residual oil from food, while also facilitating cleaning and maintenance. Compared to multi-functional gas grills in related art, this arrangement simplifies the structure, further reduces manufacturing costs, and reduces overall complexity.

In an embodiment of the present application, the multi-functional gas grill further includes a grill cover 3, the grill cover 3 is connected to the grill body 1 by snap connection, and the shape of the grill cover 3 is adapted to the shape of the first cavity 11.

Referring to FIG. 1, in this embodiment, the snap connection between the grill cover 3 and the grill body 1 facilitates opening and closing of the grill cover 3. The shape of the grill cover 3 matches the shape of the first cavity 11, allowing the grill cover 3 to be placed in the first cavity 11 for use. This ensures a tight connection between the grill cover 3 and the grill body 1, improving the integrity and efficiency of the grill body 1.

In an embodiment of the present application, a supporting assembly is provided in the first cavity 11, and the supporting assembly includes a bracket 111 and three supports 112. Each of the three supports 112 is provided at the side wall of the first cavity 11, each of the three supports 112 is provided with at least two grooves at intervals at an end proximate to the bottom wall of the first cavity 11, and the bracket 111 is provided in the grooves.

In this embodiment, the supporting assembly provides a base for placing other objects within the first cavity 11. The bracket 111 is configured to support the bracket 112, the bracket 111 is provided in a ring shape, and the bracket 112 provides a base for placing other objects. This arrangement helps enhance the overall structural stability of the first cavity 11, providing a stable support base for placing other objects. At the same time, the design of the groove facilitates adjustment of the position of the bracket 111 as needed.

In an embodiment of the present application, the multi-functional gas grill further includes a temperature equalizing plate 41, each bracket 112 is provided with a plurality of protrusions at an end away from the bottom wall of the first cavity 11, and the temperature equalizing plate 41 is abutted against the plurality of protrusions.

In this embodiment, the temperature equalizing plate 41 is configured to maintain a more uniform temperature in the grill, preventing localized overheating or overcooling and ensuring consistent cooking of food. Accordingly, the temperature equalizing plate 41 is made of a material with high thermal conductivity, such as copper or aluminum, but this is not a limitation. The abutment between the temperature equalizing plate 41 and the protrusions provides better support for the temperature equalizing plate 41 and helps prevent slipping. This arrangement improves cooking results, ensuring even temperature distribution and increasing thermal efficiency.

In an embodiment of the present application, the multi-functional gas grill further includes a tray group 4, the tray group 4 includes a first tray 42 and a second tray 43, and the shapes of the first tray 42 and the second tray 43 are adapted to the shape of the first cavity 11. The side wall of the first cavity 11 proximate to an end of each of the three brackets 112 is protruded to form a boss, a limiting groove is formed between each boss and each of the three brackets 112, and the first tray 42 is provided in any limiting groove. A side of the second tray 43 proximate to any of the protruding columns forms a limiting block, the limiting block is provided with a mating portion for snapping to each of the protruding columns, and the mating portion is snapped to the protruding column.

In this embodiment, the tray group 4 is configured to provide a stable platform for placing food, ensuring that the food does not directly contact the overheated grill walls during the baking process. Accordingly, the first tray 42 is a grilling grid, and the second tray 43 is a frying pan. The tray group 4 is adapted to the shape of the first cavity 11 to ensure effective utilization of the space in the first cavity 11. The first tray 42 is limited in the limiting groove of the bracket 112 to prevent the tray from shifting under high temperature or vibration, while the second tray 43 is snapped to the protruding column to provide a stable connection and facilitate disassembly. The above-mentioned arrangement provides an adjustable shelf system, allowing users to adjust the position of the trays as needed, effectively utilizing the space in the first cavity 11.

In an embodiment of the present application, the multi-functional gas grill further includes a control box 5, and the control box 5 is located at one side of the grill body 1. The control box 5 includes a box body 52, an air duct and a knob 51, and the box body 52 is provided with a third opening 52a and an air inlet. The knob 51 is exposed at the third opening 52a, and the air supply duct connects to an external gas source through the air inlet.

In this embodiment, the air inlet is configured to connect to an external gas source. This arrangement is convenient for operation, and the control box 5 can be directly operated through the knob 51.

In an embodiment of the present application, a multi-functional gas grill further includes a grill head 6. The boss is provided with a fourth opening 13 for the grill head 6 to pass through, a portion of the grill head 6 is exposed in the first cavity 11, an end of the grill head 6 is connected to the knob 51 through the air duct, and a ventilation plate 14 is provided at an end of the grill head 6 away from the boss.

In this embodiment, the control box 5 can adjust the gas flow rate, thereby controlling the combustion performance of the grill head 6. The ventilation plate 14 helps evenly transfer the heat generated by the grill head 6 to the first cavity 11, improving thermal efficiency. This arrangement facilitates direct heating of food in the cavity, improving combustion efficiency and ensuring a stable supply of gas.

The above descriptions are only embodiments of the present application, and are not intended to limit the scope of the present application. Under the inventive concept of the present application, any equivalent structural transformations made by using the contents of the description and drawings of the present application, or direct/indirect applications in other related technical fields are included in the scope of the present application.

## Claims

1. A multi-functional gas grill, **characterized by** comprising:
a grill body (1); and
a grill leg (2) comprising a first grill leg (21) and a second grill leg (22);
wherein the first grill leg (21) is detachably connected to the second grill leg (22); and
the first grill leg (21) and the second grill leg (22) are distributed from a top to a bottom along a height direction of the grill leg (2), and the first grill leg (21) is connected to an outer peripheral wall of the grill body (1).

2. The multi-functional gas grill according to claim 1, wherein an end of the first grill leg (21) proximate to the second grill leg (22) is provided with a first connecting portion, and an end of the second grill leg (22) proximate to the first grill leg (21) is provided with a second connecting portion; and
the first connecting portion and the second connecting portion are connected by bolting.

3. The multi-functional gas grill according to claim 2, wherein the first connecting portion is provided with a through slot, and the second connecting portion is provided with a first opening;
a side wall of the through slot proximate to the first opening is provided with a second opening;
the first opening is adapted to the second opening; and
the multi-functional gas grill further comprises a locking member, and the locking member passes through the second opening and is fixed to the first opening.

4. The multi-functional gas grill according to any one of claims 1 to 3, wherein the grill body (1) is provided with a first cavity (11);
the first cavity (11) is provided with an opening facing upward, and a longitudinal cross-section of the first cavity (11) is wider at a top and narrower at a bottom; and
a bottom wall of the first cavity (11) is provided with a boss, and a ring groove (12) is formed between the boss and the side wall of the first cavity (11).

5. The multi-functional gas grill according to claim 4, further comprising:
a grill cover (3);
wherein the grill cover (3) is connected to the grill body (1) by snap connection, and a shape of the grill cover (3) is adapted to a shape of the first cavity (11).

6. The multi-functional gas grill according to claim 4, wherein a supporting assembly is provided in the first cavity (11), and the supporting assembly comprises a bracket (111) and three supports (112);
each of the three supports (112) is provided at the side wall of the first cavity (11); and
each of the three supports (112) is provided with at least two grooves at intervals at an end proximate to the bottom wall of the first cavity (11), and the bracket (111) is provided in the grooves.

7. The multi-functional gas grill according to claim 6, further comprising:
a temperature equalizing plate (41);
wherein each of the three supports (112) is provided with a plurality of protrusions at an end away from the bottom wall of the first cavity (11), and the temperature equalizing plate (41) is abutted against the plurality of protrusions.

8. The multi-functional gas grill according to claim 6, further comprising:
a tray group (4) comprising a first tray (42) and a second tray (43);
wherein shapes of the first tray (42) and the second tray (43) are adapted to a shape of the first cavity (11);
a side wall of the first cavity (11) proximate to each of the three brackets (112) is protruded to form a protruding column, and a limiting groove is formed between the protruding column and each of the three brackets (112);
the first tray (42) is provided in any of the limiting grooves;
a side of the second tray (43) proximate to any of the protruding columns forms a limiting block, and the limiting block is provided with a mating portion for snapping to each of the protruding columns; and
the mating portion is snapped to the protruding column.

9. The multi-functional gas grill according to claim 4, further comprising:
a control box (5) provided at a side of the grill body (1) and comprising a box body (52), an air duct and a knob (51);
wherein the box body (52) is provided with a third opening (52a) and an air inlet; the knob (51) is exposed from the third opening (52a), and the air duct is connected to an external gas source through the air inlet.

10. The multi-functional gas grill according to claim 9, further comprising:
a grill head (6);
wherein the boss is provided with a fourth opening (13) for the grill head (6) to pass through, and a portion of the grill head (6) is exposed in the first cavity (11); an end of the grill head (6) is connected to the knob (51) through the air duct, and a ventilation plate (14) is provided at an end of the grill head (6) away from the boss.
